# EUROPÄISCHE PATENTSCHRIFT

(11) **EP 3 468 829 B1**
(45) Veröffentlichungstag und Bekanntmachung des Hinweises auf die Patenterteilung: **18.08.2021**
(21) Anmeldenummer: 17737481.6
(22) Anmeldetag: 31.05.2017
(51) Int. Cl.: B60L 53/12, B60L 50/40, B60L 53/14, B60L 53/30, B60L 1/00, B60L 58/12, B60L 58/20, B60L 50/53

(54) **VERFAHREN ZUM BETREIBEN EINES ELEKTRISCHEN FAHRZEUGES UND ELEKTRISCHES FAHRZEUG**
METHOD FOR OPERATING AN ELECTRIC VEHICLE AND ELECTRIC VEHICLE
PROCÉDÉ POUR FAIRE FONCTIONNER UN VÉHICULE ÉLECTRIQUE ET VÉHICULE ÉLECTRIQUE

(30) Priorität: 10.06.2016 DE 102016007088
(43) Veröffentlichungstag der Anmeldung: 17.04.2019
(73) Patentinhaber: SEW-EURODRIVE GmbH & Co. KG, 76646 Bruchsal (DE)
(72) Erfinder: SCHMIDT, Josef, 76676 Graben-Neudorf (DE); WEBER, Jochen, 68723 Plankstadt (DE); LAMPERT, Christian, 76646 Bruchsal (DE); HAUCK, Matthias, 68723 Schwetzingen (DE); BOCKELMANN, Gero, 76646 Bruchsal (DE); SCHIFFMANN, Sebastian, 76709 Kronau (DE)
(86) Internationale Anmeldenummer: PCT/EP2017/025154
(87) Internationale Veröffentlichungsnummer: WO 2017/211464

(56) Entgegenhaltungen:
- EP-A1- 2 535 218
- EP-A1- 2 918 441
- WO-A2-2011/078577
- CN-U- 203 301 199
- DE-U1-202004 021 457
- US-A1- 2007 001 650
- US-A1- 2011 291 615

## Beschreibung

Die Erfindung betrifft ein Verfahren zum Betreiben eines elektrischen Fahrzeuges und ein elektrisches Fahrzeug.

Als elektrisches Fahrzeug wird vorzugsweise ein fahrerloses, mobiles Assistenzsystem vorgesehen. Alternativ ist ein solches Fahrzeug auch als fahrerloses Transportfahrzeug (FTF) oder AGV (von englisch automated guided vehicle) bezeichenbar.

Aus der DE 10 2007 002 242 A1 ist ein fahrerloses Transportfahrzeug zum Transport von Lasten bekannt. Ein solcher Lasttransport ist als intralogistische Anwendung bezeichenbar. Das fahrerlose Transportfahrzeug wird induktiv mit Energie versorgt.

Aus der DE 195 45 544 A1 ist ein Flurförderbahnsystem bekannt, wobei die Fahrzeuge über Schleifleitungen mit elektrischer Energie versorgt werden. Um das Fahrzeug auch bei ausbleibender externer Energieversorgung betreiben zu können, wird vorgeschlagen, Elektrolyt- oder Goldcaps-Kondensatorspeicher, auch bekannt als Ultrakondensatoren, Superkondensatoren oder Doppelschichtkondensatoren, als elektrische Energiequelle zu verwenden.

Aus der EP 2 419 364 A1 ist ein fahrerloses Transportsystem bekannt, welches zwei Energiespeichereinrichtungen - eine Doppelschichtkondensatoreinrichtung und eine Batterieeinrichtung - aufweist. Im Normalbetrieb versorgt die Doppelschichtkondensatoreinrichtung die Antriebseinrichtung, also den Motor, mit Energie. Nur im Notfall, also wenn die Spannung in der Doppelschichtkondensatoreinrichtung unter ein bestimmtes Niveau fällt, wird auf Batteriebetrieb umgeschaltet. Die Antriebseinrichtung wird dann ausschließlich von der Batterieeinrichtung mit Energie versorgt bis die Doppelschichtkondensatoreinrichtung an einer Ladestation wieder aufgeladen wird.

Aus der DE 10 2009 014 386 A1 ist ein Energiespeicher und eine Steuerung zur Energieversorgung eines Traktionsnetzes eines Elektrofahrzeugs bekannt. Ein Elektromotor wird über ein Traktionsnetz mit elektrischer Energie versorgt. An das Traktionsnetz sind einerseits ein oder mehrere Batterieeinheiten über jeweilige bidirektionale DC/DC-Wandler und andererseits ein Dünnschichtkondensator gekoppelt. Die Regelung der Sollströme der Batterieeinheiten erfolgt hierbei über eine Einheit zur Regelung der DC/DC-Wandler, welche die bidirektionalen DC/DC-Wandler ansteuert. Die Einheit zur Regelung der DC/DC-Wandler wiederum empfängt von einer Einheit zum Management der Batterieeinheiten die Sollströme für alle Batterieeinheiten. Die Einheit zum Management der Batterieeinheiten erhält datentechnisch Vorgaben einerseits von einer Informations- und Bedienschnittstelle zum Fahrzeugführer und andererseits von einer Einheit zur Regelung der Traktionsnetzspannung. Die Einheit zur Regelung der Traktionsnetzspannung erhält dabei Vorgaben von einer Einheit zur Steuerung der Fahrstrategie, welche gleichzeitig eine Motorsteuerung ansteuert.

Aus der EP 2 918 441 A1 ist ein Lade-/Entladesystem für ein Hybridfahrzeug mit einem elektrischen Motor und einem Verbrennungsmotor bekannt, wobei das Fahrzeug zwei elektrische Energiespeicher in Form einer Batterie und eines Kondensators aufweist.

Aus der DE 20 2004 021 457 U1 ist ein Hybridantrieb für einen Portalhubstabler bekannt, welcher über ein Stromerzeugungsaggregat und üer zwei elektrische Energiespeicher verfügt.

Aus der WO 2011 075 577 A2 ist ein elektrisches Versorgungssystem für ein Hybridfahrzeug bekannt, welches über zwei elektrische Energiespeicher in Form einer Batterie und eines Ultracaps verfügt.

Aus der CN 203 301 199 U ist ein selbstfahrendes Fahrzeug bekannt, welches über einen elektrischen Energiespeicher verfügt, welcher kontaktbehaftet aufgeladen wird.

Aus der EP 2 535 218 A1 ist ein Leistungsversorgungssystem für ein elektrisches Fahrzeug bekannt, welches über eine Hauptbatterie und eine Hilfsbatterie verfügt.

Aus der US 2011 291 615 A1 ist ein drahtloses Ladesystem für Fahrzeuge bekannt.

Aus der US 2007 001 650 A1 ist eine Steuerung für Antriebssystem bekannt.

Der Erfindung liegt die Aufgabe zugrunde, das Energiemanagement eines elektrischen Fahrzeugs, insbesondere eines fahrerlosen, mobilen Assistenzsystems, welches über zwei verschiedene Arten von Energiespeichern verfügt, weiterzubilden und zu vereinfachen.

Erfindungsgemäß wird die Aufgabe bei dem Verfahren zum Betreiben eines elektrischen Fahrzeuges nach den in Anspruch 1 und bei dem elektrischen Fahrzeug nach den in Anspruch 11 angegebenen Merkmalen gelöst.

Bei dem Verfahren nach Anspruch 1 ist von Vorteil, dass die von einer Last oder gegebenenfalls mehreren Lasten jeweils aktuell benötigte oder abgegebene Leistung jederzeit den beiden Energiespeichereinrichtungen gleichzeitig oder einzeln entnehmbar oder zuführbar ist, wobei mittels der Wandlervorrichtung die Aufteilung der zu entnehmenden oder zuzuführenden Leistung auf die beiden Energiespeichereinrichtungen einstellbar und/oder regelbar ist. Für den Fall, dass beispielsweise die Fahrantriebseinrichtung plötzlich sehr viel Leistung abgibt, wird eine solche plötzlich auftretende Spitzenlast schnell durch die zweite Energiespeichereinrichtung aufgenommen, während die erste Energiespeichereinrichtung nach definierten Vorgaben einer Regelung Leistung aus dem Energieverteilungsmittel entnimmt. Umgekehrt können beide Energiespeichereinrichtungen bei Leistungsbedarf der Fahrantriebseinrichtung zu deren Energieversorgung beitragen. Die beiden Energiespeichereinrichtungen müssen jedoch nicht zwangsläufig immer gleichzeitig Leistung einspeisen oder gleichzeitig Leistung entnehmen. Es sind auch Betriebsphasen denkbar, bei denen nur eine Energiespeichereinrichtung Leistung einspeist oder Leistung entnimmt. Darüber hinaus sind auch Betriebsphasen denkbar, bei denen eine Energiespeichereinrichtung Leistung einspeist, während die andere Energiespeichereinrichtung Leistung entnimmt. Der Ausdruck, dass sich der zweite Leistungsfluss zwischen der zweiten Energiespeichereinrichtung und dem Energieverteilungsmittel selbsttätig einstellt ist so zu verstehen, dass auftretende Potentialdifferenzen zwischen Energieverteilungsmittel und zweiter Energiespeichereinrichtung zwangsläufig, also von selbst, ausgeglichen werden und zu dem zweiten Leistungsfluss führen, insbesondere ohne dass dabei eine aktive Steuerung oder Regelung eingesetzt wird.

Unter einer Hybridspeichereinrichtung wird eine Anordnung aus einem oder mehreren sekundären elektrochemischen Elementen verstanden. Ein solches sekundäres elektrochemisches Element ist beispielsweise in der EP 2 983 236 A1 beschrieben und umfasst eine negative Elektrode, eine positive Elektrode, einen porösen Separator, der die negative und die positive Elektrode voneinander trennt sowie einen wässrigen alkalischen Elektrolyten, mit dem die Elektroden und der Separator getränkt sind. Ein sekundäres elektrochemisches Element weist sowohl Kondensatoreigenschaften, also die Fähigkeit Energie elektrostatisch zu speichern, als auch Batterieeigenschaften, also die Fähigkeit Energie elektrochemisch zu speichern, auf. Aus diesem Grund wird es im Folgenden als Hybridspeichereinrichtung bezeichnet. Eine Hybridspeichereinrichtung ist dabei wie ein Kondensator dazu in der Lage, sehr schnell hohe Pulsströme zu liefern, es weist jedoch eine höhere Kapazität als ein Kondensator auf. Im Vergleich zu einer herkömmlichen Batterie weist die Hybridspeichereinrichtung eine höhere Zyklenfestigkeit auf. Lade- und Entladezyklen sind also häufiger durchführbar, bevor die Leistungskriterien der Hybridspeichereinrichtung nicht mehr erfüllt werden.

Das erfindungsgemäße Verfahren lässt sich insbesondere auch auf andere elektrisch angetriebene Fahrzeuge übertragen und ist daher insbesondere nicht auf die Anwendung fahrerloses, mobiles Assistenzsystem beschränkt.

Bei der erfindungsgemäßen Ausgestaltung wird die Gleichspannung von der Wandlervorrichtung erfasst und der Sollwert in der Wandlervorrichtung in Abhängigkeit der erfassten Gleichspannung bestimmt, also erzeugt. Von Vorteil ist dabei, dass die Sollwertgenerierung lokal in der Wandlervorrichtung erfolgt, also losgelöst von der zentralen Steuereinrichtung, also dezentral. Somit ist schnell auf auftretende Spannungsveränderungen im Energieverteilungsmittel reagierbar, ohne die Steuereinrichtung mit dieser Aufgabe zu belasten. Die übergeordnete Steuereinrichtung muss daher weniger Rechenleistung bewältigen und eine schnelle Kommunikation zwischen der Steuereinrichtung und der Wandlervorrichtung ist verzichtbar. Da die erfasste Gleichspannung im Wesentlichen der Spannung in der zweiten Energiespeichereinrichtung gleicht, erfolgt die Regelung des Leistungsflusses in Abhängigkeit der Spannung der zweiten Energiespeichereinrichtung und damit abhängig von ihrem Ladezustand.

Erfindungsgemäß wird der Sollwert abhängig von der, insbesondere erfassten, Gleichspannung gemäß einer Funktion bestimmt. Von Vorteil ist dabei, dass jedem erfassten Gleichspannungswert ein Sollwert eindeutig zugeordnet ist. Die Funktion ist vorteilhafterweise auf einem Festwertspeicher hinterlegt. Der Festwertspeicher ist beispielsweise Teil eines digitalen Prozessors oder Mikrocontrollers und dabei Bestandteil der Wandlervorrichtung.

Bei einer vorteilhaften Ausgestaltung ist die Funktion stetig und/oder stetig differenzierbar. Die Stetigkeit der Funktion hat den Vorteil, dass keine Sprünge im Sollwert, also plötzlich auftretenden große Änderungen im Sollwert, auftauchen. Dadurch ist die Regelbarkeit verbessert, da Regelschwingungen unterdrückbar sind.

Bei einer vorteilhaften Ausgestaltung ist die Funktion parametrierbar. Von Vorteil ist dabei, dass die Funktion änderbar ist. Dadurch ist beispielsweise auf geänderte Leistungsbedürfnisse der Lasten, also auf eine geänderte mittlere Grundlast, oder auf veränderte Umgebungsbedingungen reagierbar.

Bei einer vorteilhaften Ausgestaltung ist die Wandlervorrichtung über eine erste Kommunikationsleitung mit der Steuereinrichtung verbunden, wobei die Parametrierung der Funktion durch die Steuereinrichtung vorgenommen wird, insbesondere bei Inbetriebnahme des elektrischen Fahrzeugs. Von Vorteil ist dabei, dass mittels der Steuereinrichtung auf signifikante Änderungen des Leistungsbedarfes oder der Leistungseinspeisung reagiert werden kann oder dass mittels der Steuereinrichtung die Funktion auf die Bedürfnisse der intralogistischen Anwendung, also Anlagenparameter, angepasst werden kann. Solche Änderungen sind sogar im laufenden Betrieb vornehmbar. Die Funktion ist vor Inbetriebnahme des elektrischen Fahrzeuges anhand der jeweiligen intralogistischen Anwendung vorgebbar und im Festwertspeicher der Wandlervorrichtung speicherbar.

Bei einer vorteilhaften Ausgestaltung nimmt der Sollwert der Funktion mit zunehmender Gleichspannung monoton, insbesondere aber nicht streng monoton, ab, wobei der Sollwert zumindest in einem Wertebereich der Gleichspannung konstant, insbesondere null, ist. Von Vorteil ist dabei, dass in einem Wertebereich der Gleichspannung eine definierte Leistung von der ersten Energiespeichereinrichtung in das Energieverteilungsmittel eingespeist wird. Dadurch ist die Regelbarkeit verbessert. Wenn der in diesem Bereich konstante Sollwert null ist, ist die Standzeit der ersten Energiespeichereinrichtung verlängerbar und ihre Alterung verringerbar.

Bei einer vorteilhaften Ausgestaltung weist die Funktion einen absoluten Maximalwert und/oder einen absoluten Minimalwert im Wertebereich des Sollwertes auf. Von Vorteil ist dabei, dass die physikalischen Eigenschaften der ersten Energiespeichereinrichtung, nämlich maximale Ladeleistung und maximale Einspeiseleistung, berücksichtigbar sind und somit eine Zerstörung der ersten Energiespeichereinrichtung vermeidbar ist. Dabei können maximale Ladeleistung und maximale Einspeiseleistung einen unterschiedlichen Betrag haben und so physikalische Eigenschaften der ersten Energiespeichereinrichtung berücksichtigen.

Erfindungsgemäß ist die Funktion derart ausgebildet, dass der Sollwert der Funktion unterhalb eines Wertes U₁ der Gleichspannung konstant ist, insbesondere den absoluten Maximalwert aufweist, der Sollwert der Funktion in einem Wertebereich der Gleichspannung von U₁ bis U₂ betragsmäßig, insbesondere linear, abnimmt, der Sollwert der Funktion K in einem Wertebereich der Gleichspannung von U₂ bis U₃ einen konstanten Wert aufweist, der Sollwert der Funktion in einem Wertebereich der Gleichspannung von U₃ bis U₄, insbesondere linear, abnimmt, insbesondere wobei ein Spannungswert existiert, bei dem der Sollwert verschwindet, also null ist, der Sollwert der Funktion oberhalb eines Wertes U₄ der Gleichspannung konstant ist, insbesondere den absoluten Minimalwert (P_{1_min}) aufweist, wobei U₄ > U₃ > U₂ > U₁ gilt. Von Vorteil ist dabei, dass kein plötzliches, also abruptes, Umschalten zwischen den beiden Energiespeichereinrichtungen erfolgt. Sobald die Spannung den Wert U₂ unterschreitet und weiter absinkt, speist die erste Energiespeichereinrichtung nach und nach mehr Leistung in das Energieverteilungsmittel ein.

Der konstante Sollwert des Leistungsflusses zwischen den beiden Spannungen U₂ und U₃ sollte mit der mittleren Grundlast der intralogistischen Anwendung korrelieren. In diesem Bereich speist zumindest die erste Energiespeichereinrichtung gerade so viel Leistung ein, welche im Mittel benötigt wird. Eventuell auftretende Leistungsspitzen werden dann von der zweiten Energiespeichervorrichtung ausgeglichen, also gepuffert.

Wenn der Leistungsbedarf hoch ist und auch die zweite Energiespeichereinrichtung bei U_{EV} < U₂ Leistung einspeist, unterstützt die erste Energiespeichereinrichtung die zweite Energiespeichereinrichtung zunehmend mehr. Diese zunehmende Unterstützung erfolgt nicht abrupt, sondern linear, d.h. je niedriger das Spannungsniveau im Energieverteilungsmittel fällt, desto mehr speist die erste Energiespeichereinrichtung Leistung ein. Sobald die Spannung U_{EV} den Wert U₃ überschreitet, sinkt der Sollwert des ersten Leistungsflusses mit steigender Spannung, insbesondere linear. Wenn der Sollwert zwischen U₂ und U₃ nicht null ist, wird mit steigender Spannung U_{EV} bei einem bestimmten Punkt ein Spannungswert U_{N} erreicht, bei dessen Überschreitung die erste Energiespeichereinrichtung Leistung aus dem Energieverteilungsmittel aufnimmt. Das Absinken des Sollwertes erfolgt bevorzugt linear, so dass eine einfache Regelung erreichbar ist. Die Leistungsflüsse in die beiden Energiespeichereinrichtungen haben zu einem nicht vernachlässigbaren zeitlichen Anteil verschiedene Vorzeichen. Es gibt also Betriebsphasen, in denen die eine Energiespeichereinrichtung Leistung einspeist, während die andere Energiespeichervorrichtung Leistung aufnimmt und umgekehrt. Wird dem Energieverteilungsmittel durch eine externe Energieversorgung oder generatorischen Betrieb Leistung zugeführt und ist das Spannungsniveau im Energieverteilungsmittel kleiner U₂, so wird die zweite Energiespeichereinrichtung sowohl durch die externe Energieversorgung oder den generatorischen Betrieb als auch durch die erste Energiespeichereinrichtung geladen. Von Vorteil ist dabei, dass die zweite Energiespeichereinrichtung schnell wieder einen besten Arbeitsbereich zwischen U₂ und U₃ erreicht. Benötigt die elektrische Fahrantriebseinrichtung oder ein anderer Verbraucher Leistung und ist das Spannungsniveau im Energieverteilungsmittel größer U_{N}, so versorgt die zweite Energiespeichereinrichtung die Fahrantriebseinheit oder den Verbraucher, während zeitgleich die erste Energiespeichereinrichtung aufgeladen wird. Von Vorteil ist dabei, dass die zweite Energiespeichereinrichtung schnell wieder einen besten Arbeitsbereich zwischen U₂ und U₃ erreicht und die erste Energiespeichereinrichtung über einen längeren Zeitraum geladen werden kann.

Erfindungsgemäß wird dem Energieverteilungsmittel zeitabschnittsweise Leistung von einem Gleichrichter des elektrischen Fahrzeugs zugeführt, der aus einer Sekundärinduktivität des elektrischen Fahrzeugs gespeist wird, insbesondere welcher eine Kapazität derart in Reihe oder parallel zugeschaltet ist, dass die Resonanzfrequenz des so gebildeten Schwingkreises der Frequenz eines in einen stationär angeordneten Primärleiter eingeprägten Wechselstromes gleicht. Von Vorteil ist dabei, dass auf Teilbereichen der Fahrstrecke die Energieversorgung induktiv ausführbar ist und dadurch die beiden Energiespeichereinrichtungen entweder wieder aufladbar sind oder ihr Ladezustand vollgeladen gehalten wird und somit ihre Standzeit verlängerbar ist, da sie möglichst wenig Ladezyklen ausgesetzt werden, insbesondere also nicht häufig auf- und entladen werden. Die Alterung ist somit dadurch verringert. Durch die induktive Energieübertragung ist auch die Sicherheit erhöht und es kommt nicht zu einem Verschleiß von ansonsten erforderlichen Schleifleitungen. Zusätzlich ist die Aufladung der Energiespeicher im laufenden Betrieb auch bei Bewegung des Fahrzeuges möglich. Die Energieversorgung ist dabei beispielsweise durch im Boden der Fertigungshalle verlegte Linienleiter erzeugbar. Die Linienleiter dienen als Primärleiter, in welche ein Wechselstrom eingeprägt wird. Solange die Fahrzeuge diesem Primärleiter folgen, ist elektrische Energie aufnehmbar. Für Fahrten abseits der Linienleiter wird das Fahrzeug durch die beiden Energiespeichereinrichtungen mit Leistung versorgt. Alternativ zum Primärleiter sind auch Ladestationen mit Ladematten ausführbar. Hier wird über mindestens eine Primärspule der Ladematte Leistung auf das Fahrzeug übertragen.

Bei einer vorteilhaften Ausgestaltung wird dem Energieverteilungsmittel kontaktbehaftet Leistung durch eine, insbesondere mobile, externe Leistungsquelle zugeführt, insbesondere bei Stillstand des Fahrzeuges. Von Vorteil ist dabei, dass ein einfaches Aufladen der Energiespeichereinrichtungen erreichbar ist. Die kontaktbehaftete Auflademöglichkeit kann auch zusätzlich zur induktiven Auflademöglichkeit realisiert sein. Von Vorteil ist dabei, dass bei Ausfall der induktiven Energieversorgung und bei entleerten Energiespeichern ein einfaches Aufladen der Energiespeichereinrichtungen erreichbar ist und ein manuelles Bewegen oder Verschieben des Fahrzeuges zu einer Ladestation verzichtbar ist.

Bei einer vorteilhaften Ausgestaltung ist die Wandlervorrichtung über eine zweite Kommunikationsleitung mit der ersten Energiespeichereinrichtung und/oder mit der zweiten Energiespeichereinrichtung verbunden, wobei über die zweite Kommunikationsleitung Zustandsdaten wie beispielsweise Temperatur oder Ladezustand der ersten Energiespeichereinrichtung und/oder der zweiten Energiespeichereinrichtung an die Wandlervorrichtung übermittelt werden, insbesondere wobei der Maximalwert und/oder der Minimalwert der Funktion in Abhängigkeit der übermittelten Zustandsdaten angepasst wird beziehungsweise werden. Von Vorteil ist dabei, dass auf veränderliche physikalische Eigenschaften der ersten Energiespeichereinrichtung reagiert werden kann. Beispielsweise ist die maximale Ladeleistung der Energiespeicher abhängig von der Temperatur der Energiespeicher. Wenn nach längerer Stillstandzeit des Fahrzeugs diese Temperatur noch in einem zu niedrigen Bereich ist, welcher eine niedrigere maximale Ladeleistung der ersten Energiespeichereinrichtung zur Folge hat, so ist dies berücksichtigbar, um die erste Energiespeichereinrichtung nicht zu überlasten. Nach Erreichen der Betriebstemperatur ist die maximale Ladeleistung dann entsprechend anpassbar. Das gleiche gilt sinngemäß für zu hohe Temperaturen der ersten Energiespeichereinrichtung. Die Leistungsfähigkeit der zweiten Energiespeichereinrichtung, die durch Doppelschichtkondensatoren gebildet wird, ist in einem weiten Temperaturbereich praktisch nicht eingeschränkt.

Bei einer vorteilhaften Ausgestaltung weist das elektrische Fahrzeug mindestens einen Verbraucher auf, wobei der mindestens eine Verbraucher mittels des Energieverteilungsmittels mit Leistung versorgt wird, wobei zwischen dem mindestens einen Verbraucher und dem Energieverteilungsmittel ein ansteuerbares Schaltelement angeordnet ist zur Trennung der Leistungsversorgung des mindestens einen Verbrauchers, wobei das ansteuerbare Schaltelement durch die Wandlervorrichtung derart angesteuert wird, dass die Leistungsversorgung unterbrochen wird, sobald die erfasste Spannung unter einen bestimmten Wert fällt. Von Vorteil ist dabei, dass auf Notsituationen, wie beispielsweise drohende Entladung der Energiespeichereinrichtungen, reagiert werden kann. Die Reaktion erfolgt wiederum dezentral, also losgelöst von der zentralen Steuereinrichtung. Als Verbraucher ist beispielsweise ein Roboterarm denkbar, welcher auf dem elektrischen Fahrzeug montiert ist. Dieser kann Lasten oder Stückgütern umsetzen und so einem Monteur assistieren.

Bei dem elektrischen Fahrzeug nach Anspruch 11 ist von Vorteil, dass, die von einer Last oder gegebenenfalls mehreren Lasten jeweils aktuell benötigte oder abgegebene Leistung jederzeit den beiden Energiespeichereinrichtungen gleichzeitig oder einzeln entnehmbar oder zuführbar ist, wobei mittels der Wandlervorrichtung die Aufteilung der zu entnehmenden oder zuzuführenden Leistung auf die beiden Energiespeichereinrichtungen einstellbar und/oder regelbar ist. Für den Fall, dass beispielsweise die Fahrantriebseinrichtung plötzlich sehr viel Leistung abgibt, wird eine solche plötzlich auftretende Spitzenlast schnell durch die zweite Energiespeichereinrichtung aufgenommen, während die erste Energiespeichereinrichtung nach definierten Vorgaben einer Regelung Leistung aus dem Energieverteilungsmittel entnimmt. Umgekehrt können beide Energiespeichereinrichtungen bei Leistungsbedarf der Fahrantriebseinrichtung zu deren Energieversorgung beitragen.

Die insbesondere direkte Anbindung der zweiten Energiespeichereinrichtung als auch die Anbindung der ersten Energiespeichereinrichtung über eine Wandlervorrichtung schließt nicht aus, dass beide Energiespeichereinrichtungen aus Gründen der Sicherheit durch Sicherungs- und/oder Schaltelemente absicherbar und/oder abschaltbar sind.

Bei einer vorteilhaften Ausgestaltung weist die Wandlervorrichtung ein erstes Regelglied auf, wobei dem ersten Regelglied die Differenz zwischen dem ersten Ausgangssignal und einem ersten Ist-Wert zuführbar ist, wobei mittels des ersten Regelglieds ein zweites Ausgangssignal erzeugbar, also bestimmbar, ist.

Bei einer vorteilhaften Ausgestaltung weist die Wandlervorrichtung ein zweites Regelglied auf, wobei dem zweiten Regelglied die Differenz zwischen dem zweiten Ausgangssignal und einem zweiten Ist-Wert zuführbar ist, wobei mittels des zweiten Regelglieds ein drittes Ausgangssignal erzeugbar, also bestimmbar, ist.

Bei einer vorteilhaften Ausgestaltung ist die Abhängigkeit des Ausgangssignals vom Spannungssignal mittels einer Funktion K beschreibbar. Von Vorteil ist dabei, dass jedem erfassten Gleichspannungswert ein Sollwert eindeutig zugeordnet ist.

Weitere Vorteile ergeben sich aus den Unteransprüchen.

Die Erfindung wird nun anhand von Abbildungen näher erläutert:
In der Figur 1 ist ein erfindungsgemäßes Energieverteilungssystem für ein mobiles Assistenzsystem schematisch gezeigt. Das mobile Assistenzsystem wird im Folgenden als MAS bezeichnet.
In der Figur 2 ist eine erfindungsgemäße Wandlervorrichtung schematisch gezeigt.
In der Figur 3 ist schematisch die Regelungsstruktur gezeigt.
In der Figur 4 ist eine erfindungsgemäße Sollwertkennlinie gezeigt.

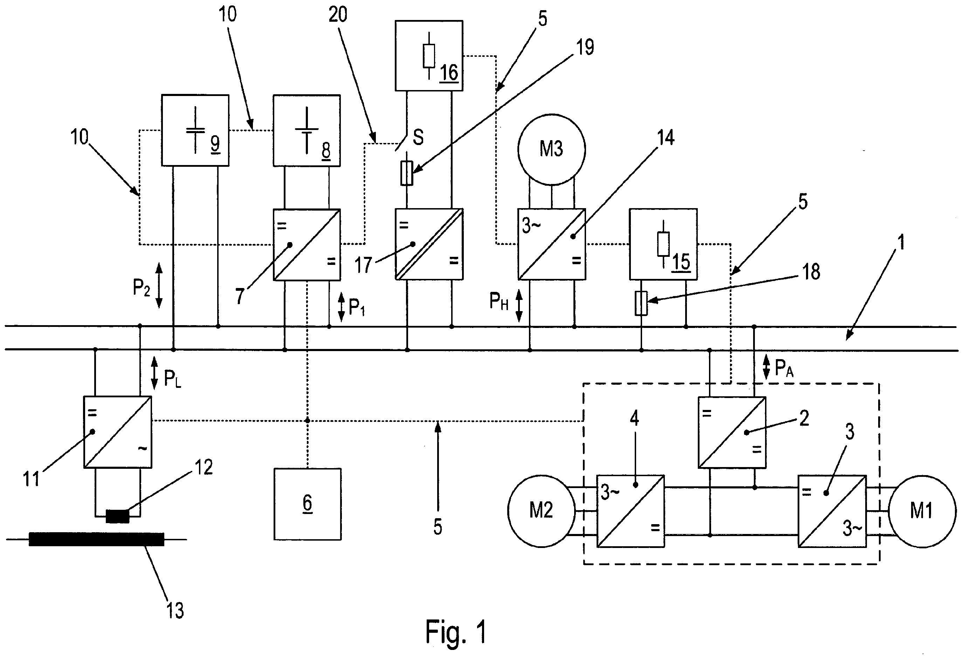

Figur 1 zeigt ein Energieverteilungsmittel 1, welches aus zwei Stromleitungen besteht, wobei zwischen den beiden Stromleitungen eine Gleichspannung U_{EV} anliegt. Das Energieverteilungsmittel 1 ist also ein Energiebus, welcher Energie beziehungsweise Leistung an angeschlossene Teilnehmer verteilt oder Energie beziehungsweise Leistung von diesen aufnimmt. Die Stromleitungen können als Kabel oder massive Stromschienen ausgeführt sein. Eine andere Bezeichnungsmöglichkeit ist Energieverteilungsschiene. Der Energiebus führt eine Gleichspannung U_{EV}. Diese Gleichspannung U_{EV} ist variabel und nimmt im Betriebsfall Werte bis zu 65 V an. Für gewöhnlich beträgt die Gleichspannung U_{EV} ca. 60 V.

Der Energiebus 1 ist mit einer zweiachsigen Fahrantriebseinrichtung (2, 3, 4, M1, M2) für die Fahrbewegung des MAS verbunden. Im gezeigten Ausführungsbeispiel besteht die Fahrantriebseinrichtung (2, 3, 4, M1, M2) aus einem ersten DC/DC-Wandler 2, einem ersten dreiphasigen Wechselrichter 3, einem zweiten dreiphasigen Wechselrichter 4, einem ersten Drehstrommotor M1 und einem zweiten Drehstrommotor M2. Der erste Drehstrommotor M1 ist über den ersten Wechselrichter 3 mit dem DC/DC-Wandler 2 verbunden. Parallel dazu ist der zweite Drehstrommotor M2 über den zweiten Wechselrichter 4 ebenfalls mit dem DC/DC-Wandler 2 verbunden. Die an den Wechselrichtern (3,4) anliegende Gleichspannung beträgt typischerweise ca. 60 - 120 V oder 250 - 300 V.

Die zwei Achsen der Fahrantriebseinrichtung (2, 3, 4, M1, M2) lassen sich unabhängig voneinander ansteuern, so dass das MAS nach Art eines Panzerantriebes verfahrbar ist. Kurvenfahrten werden durch gegenläufig drehende oder gleichläufig, aber unterschiedlich schnell drehende Motorbewegungen realisiert, während Geradeausfahrten durch synchronen Betrieb der beiden Achsen realisiert werden.

Es ist möglich, auch mehr als zwei Antriebsmotoren zum Antrieb des MAS einzusetzen. In alternativen Ausführungsformen ist es auch möglich, dass die Wechselrichter (3, 4) direkt mit dem Energiebus 1 verbunden sind, also kein DC/DC-Wandler eingesetzt wird. Darüber hinaus sind anstatt der Drehstrommotoren auch Gleichstrommotoren, insbesondere elektrisch kommutierte bürstenlose Gleichstrommotoren, einsetzbar.

Die Fahrantriebseinrichtung (2, 3, 4, M1, M2) ist über eine erste Kommunikationsleitung 5, beispielsweise einen Kommunikationsbus wie CAN, Ethernet, EtherCAT oder andere, mit einer übergeordneten, also zentralen, Steuereinrichtung 6, beispielsweise mit einer speicherprogrammierbaren Steuerung, verbunden. Die Steuerung 6 ist ein Bestandteil des MAS, ist also auf dem MAS montiert, und steuert die Fahrbewegung des MAS. Je nach Leistungsbedarf wird die Fahrantriebseinrichtung (2, 3, 4, M1, M2) mit Leistung aus dem Energiebus 1 versorgt. Zwischen dem Energiebus 1 und der Fahrantriebseinrichtung (2, 3, 4, M1, M2) findet also ein Leistungsfluss P_{A} statt. Wenn die Antriebsmotoren (M1, M2) beim Abbremsen des Fahrzeuges generatorisch Leistung erzeugen, wird diese überschüssige Leistung wieder in den Energiebus 1 zurückgespeist. Der Leistungsfluss P_{A} ist also bidirektional.

Im Zusammenhang dieser Erfindung werden Leistungen beziehungsweise Leistungsflüsse, welche in den Energiebus eingespeist werden, als positiv definiert. Dementsprechend werden Leistungen beziehungsweise Leistungsflüsse, welche vom Energiebus 1 auf andere Vorrichtungen übertragen werden, als negativ definiert.

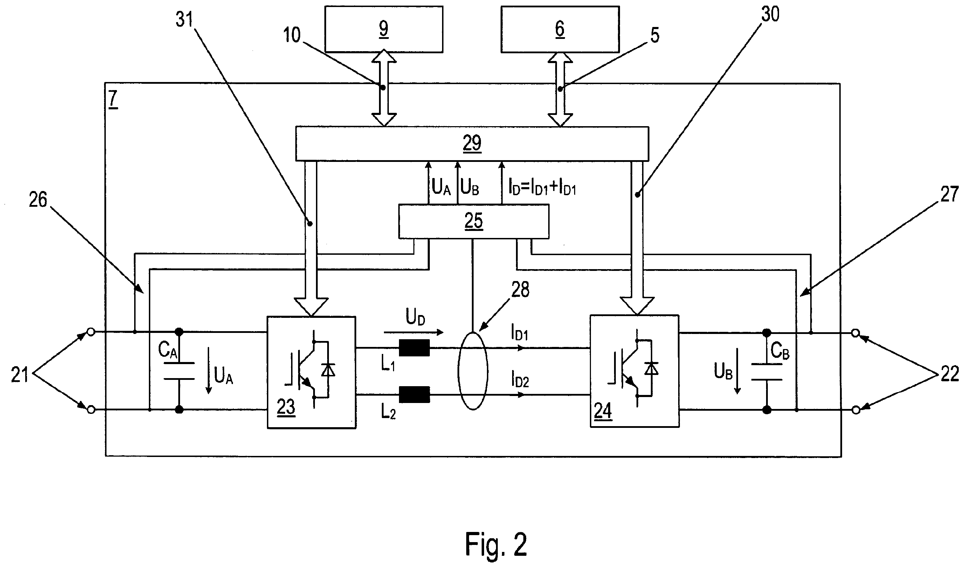

Der Energiebus 1 ist über eine Wandlervorrichtung 7, welches in diesem Beispiel als bidirektionaler DC/DC-Wandler ausgeführt ist, mit einer ersten Energiespeichereinrichtung 8, beispielsweise einer Hybridspeichereinrichtung, elektrisch verbunden. Einzelne Hybridspeicherelemente lassen sich modular zu einer Hybridspeichereinrichtung zusammenfügen, wodurch verschiedene Spannungen der Hybridspeichereinrichtung im vollgeladenen Zustand erreichbar sind. Alternativ sind auch mehrere herkömmliche wieder aufladbare Batterien verwendbar. Die maximale Spannung in der ersten Energiespeichereinrichtung 9 beträgt bevorzugt 31 - 74 V. Je nach Belastungssituation ist die Spannung in der ersten Energiespeichereinrichtung 8 höher oder niedriger als die Gleichspannung U_{EV} des Energiebusses 1. Der genaue Aufbau der Wandlervorrichtung 7 wird später anhand Figur 2 beschrieben.

Der Energiebus 1 ist direkt mit einer zweiten Energiespeichereinrichtung 9 elektrisch verbunden. Die zweite Energiespeichereinrichtung 9 ist in Form einer schnell aufladbaren Energiespeichereinrichtung, beispielsweise einem Doppelschichtkondensator, ausgebildet. Die zweite Energiespeichereinrichtung 9 ist schneller auf- und entladbar als die erste Energiespeichereinrichtung 8. Sie ist also dynamischer verwendbar. Durch die direkte Verbindung werden mögliche Spannungsdifferenzen zwischen der zweiten Energiespeichereinrichtung 9 und dem Energiebus 1 schnell ausgeglichen. Der Spannungsverlauf in der zweiten Energiespeichereinrichtung 9 folgt also im Wesentlichen dem Spannungsverlauf im Energiebus 1. Die direkte Anbindung schließt Sicherungselemente nicht aus.

In dem gezeigten Ausführungsbeispiel sind bespielhaft jeweils nur eine erste und eine zweite Energiespeichereinrichtung gezeigt. Die Energiespeichereinrichtungen (8, 9) können selbst modular aufgebaut sein, also aus mehreren gleichartigen Elementen bestehen. Darüber hinaus sind auch jeweils mehr als eine erste und/oder zweite Energiespeichereinrichtung einsetzbar. Im Fall von mehreren zweiten Energiespeichereinrichtungen sind diese parallel miteinander verbunden. Im Fall von mehreren ersten Energiespeichereinrichtungen kann jede einzelne erste Energiespeichereinrichtung über einen separaten DC/DC-Wandler mit dem Energiebus 1 verbunden werden.

Die erste Energiespeichereinrichtung ist als primäre Energiequelle ausgestaltet, während die zweite Energiespeichereinrichtung als sekundäre Energiequelle ausgestaltet ist. Die Bezeichnungen "primär" und "sekundär" sind im Zusammenhang der Erfindung so zu verstehen, dass die primäre, also erste, Energiespeichereinrichtung zum größten Teil die Antriebsenergie für den Betrieb der Fahreinrichtung zur Verfügung stellt. Die Kapazität der primären, also ersten, Energiespeichereinrichtung muss in Bezug auf die logistische Anwendung so dimensioniert sein, dass die Energie des primären, also ersten, Energiespeichers für geplante Fahrzyklen ausreicht. Insbesondere sollte die mittlere Grundlast zumindest durch die primäre Energiespeichereinrichtung abdeckbar sein. Die sekundäre, also zweite, Energiespeichereinrichtung dient lediglich dazu, eventuell auftretende Leistungsspitzen auszugleichen.

Die erste und zweite Energiespeicheinrichtung (8, 9) können bspw. im Wartungs- oder Störungsfall vom Energiebus 1 getrennt werden. Zu diesem Zweck sind zwischen der zweiten Energiespeichereinrichtung 9 und dem Energiebus 1 beziehungsweise zwischen der ersten Energiespeichereinrichtung 8 und dem zweiten DC/DC-Wandler 7 in der Figur 1 nicht gezeigte Schaltvorrichtungen angebracht. Diese Schaltvorrichtungen sind beispielsweise extern von einem Servicetechniker mittels eines Wartungsschalters manuell oder direkt von der Steuerung 6 betätigbar.

Der zweite DC/DC-Wandler 7 empfängt über eine zweite Kommunikationsleitung 10, wie beispielsweise einem analogen Bus oder einem Kommunikationsbus, Zustandsdaten von der ersten Energiespeichereinrichtung 8 und/oder der zweiten Energiespeichereinrichtung 9. Diese Zustandsdaten sind beispielsweise Temperatur, Spannung, Ladezustand, Ladestrom, Fehlerzustände, usw. Der zweite DC/DC-Wandler 7 weist also eine erste Kommunikationsschnittstelle zum Empfang der Zustandsdaten auf.

Der Energiebus 1 ist über einen Gleichrichter 11 mit einer beispielsweise an der Unterseite des MAS angeordneten Sekundärinduktivität 12 verbunden. Die Sekundärinduktivität 12 ist elektromagnetisch an eine Primärinduktivität 13, welche beispielsweise in Form eines Primärleiters im Boden einer Montage- und/oder Fertigungshalle angeordnet ist, koppelbar. Dadurch ist es möglich, Leistung berührungslos, also induktiv, von einer nicht näher dargestellten externen Spannungsquelle auf den Energiebus 1 zu übertragen. Der Leistungsfluss P_{L} ist dabei immer größer oder gleich Null.

Der Gleichrichter 11 ist über die erste Kommunikationsleitung 5 mit der Steuerung 6 verbunden und sendet der Steuerung 6 die Information, ob berührungslose Energieübertragung möglich und/oder vorhanden ist oder nicht. Der Gleichrichter speist abhängig von der Spannung Leistung in den Energiebus ein. Es findet also ein Leistungsfluss P_{L} zwischen Gleichrichter und Energiebus statt.

Der Energiebus 1 ist mit einem dritten dreiphasigen Wechselrichter 14 verbunden. Der dritte Wechselrichter 14 stellt eine dreiphasige Versorgungsspannung für einen dritten Motor M3 zur Verfügung. Der dritte Motor M3 wird dabei nicht als Antriebsmotor für die Fahrbewegung des MAS verwendet, sondern zum Antrieb von beispielsweise auf dem Fahrzeug befindlichen Hub- und/oder Handlingseinrichtungen, wie beispielsweise einen Roboterarm. Der dritte Motor M3 ist in diesem Ausführungsbeispiel als Drehstrommotor, insbesondere synchroner Servomotor ausgeführt. Es kann jedoch auch als Gleichstrommotor, insbesondere elektrisch kommutierter bürstenloser Gleichstrommotor, ausgeführt sein.

Zusätzlich zu dem dargestellten dritten Motor M3 sind noch weitere Motoren denkbar, welche auch mit dem Energiebus 1 optional jeweils über weitere Wechselrichter verbunden sind und welche verschiedene Achsen von Hub- und/oder Handlingseinrichtungen antreiben.

Der dritte Wechselrichter 14 ist über die Kommunikationsleitung 5 durch die Steuerung 6 ansteuerbar. Die Steuereinrichtung 6 steuert die Bewegung der Hub- und/oder Handlingseinrichtung, wobei je nach Leistungsbedarf die Antriebseinrichtung (14, M3) der Hub- und/oder Handlingseinrichtung mit Leistung aus dem Energiebus 1 versorgbar ist. Es findet dabei ein Leistungsfluss P_{H} zwischen Energiebus 1 und der Antriebseinrichtung (14, M3) der Hub- und/oder Handlingseinrichtung statt. P_{H} kann im generatorischen Betrieb des Motors M3 negative Werte annehmen. Es findet dann eine Energierückspeisung über den Energiebus in eine oder beide Energiespeichereinrichtungen statt.

Der Energiebus 1 ist mit elektrischen Verbrauchern (15, 16), wie beispielsweise Scanner, Kamera, Sensoren, W-LAN-Modem, Blinker, etc. verbunden. In der dargestellten Ausführungsvariante ist beispielhaft ein erster Verbraucher 15 direkt an den Energiebus 1 angeschlossen, während zwischen einem zweiten Verbraucher 16 und dem Energiebus 1 ein dritter DC/DC-Wandler 17 angeordnet ist. In diesem Ausführungsbeispiel ist der dritte DC/DC-Wandler 17 als galvanisch getrennter DC/DC-Wandler ausgeführt, welcher nicht ansteuerbar ist und eine konstante Gleichspannung von bevorzugt 24V liefert. Neben den zwei gezeigten Verbrauchern (15, 16) sind noch weitere Verbraucher an den Energiebus 1 anschließbar. Die Verbraucher (15, 16) sind durch Sicherungen (18, 19) vor Überlast bzw. Zerstörung geschützt. Die Verbraucher (15, 16) senden über die erste Kommunikationsleitung 5 Informationen und/oder Daten, wie beispielsweise Leistungsbedarf, Temperatur, Betriebszustand, Zustandsgrößen, Fehlermeldungen, und so weiter an die Steuerung 6. Die Verbraucher (15, 16) sind durch die Steuerung 6 ein- und ausschaltbar. Der Motor M3 ist auch als Verbraucher bezeichenbar.

Die Steuerung 6 steuert und/oder regelt die Bewegung der Motoren M1, M2 und M3, beispielsweise durch eine Drehzahlregelung oder eine Drehmomentregelung, wobei sich aufgrund dieser Steuerung und/oder Regelung die Leistungsflüsse P_{A} und P_{H} entsprechend einstellen. Die Leistungsflüsse P_{A} und P_{H} werden also von der Steuerung, insbesondere indirekt, beeinflusst und sind durch sie vorgebbar. Der Leistungsfluss P₂ zwischen der zweiten Energiespeichereinrichtung 9 und dem Energiebus 1 stellt sich selbsttätig ein, ist also insbesondere nicht direkt durch die Steuerung steuer- und/oder regelbar.

Der Leistungsfluss P₁ zwischen der ersten Energiespeichereinrichtung 8 und dem Energiebus 1 wird erfindungsgemäß von der Wandlervorrichtung 7, also dem zweiten DC/DC-Wandler, geregelt. Die Regelung von P₁ erfolgt also dezentral, also losgelöst von der durch die Steuerung bedingten Beeinflussung der Leistungsflüsse P_{H} und P_{A}.

Figur 2 zeigt beispielhaft einen möglichen Aufbau der Wandlervorrichtung 7, also des zweiten DC/DC-Wandlers. Die Wandlervorrichtung 7 ist über einen ersten Gleichspannungsanschluss 21 mit dem Energiebus 1 verbunden. Dieser Anschluss wird auch als A-seitiger Anschluss bezeichnet. Über einen zweiten Gleichspannungsanschluss 22 ist die Wandlervorrichtung 7 mit der ersten Energiespeichereinrichtung 8 verbunden. Dieser Anschluss wird als B-seitiger Anschluss bezeichnet. Parallel zu den Gleichspannungsanschlüssen (21,22) sind entsprechende Kondensatoren C_{A} und C_{B} geschaltet, an denen die Spannungen U_{A} bzw. U_{B} anliegen.

Der A-seitige und der B-seitige Anschluss sind über Brückenschaltungen (23, 24) mit Speicherdrosseln der Induktivität L₁ bzw. L₂, über denen jeweils die Spannung U_{D} abfällt, verbunden. Die in den Strompfaden fließenden Ströme werden mit I_{D1} und I_{D2} bezeichnet. Die Anzahl der Strompfade kann variieren und beispielsweise eins, zwei oder vier betragen.

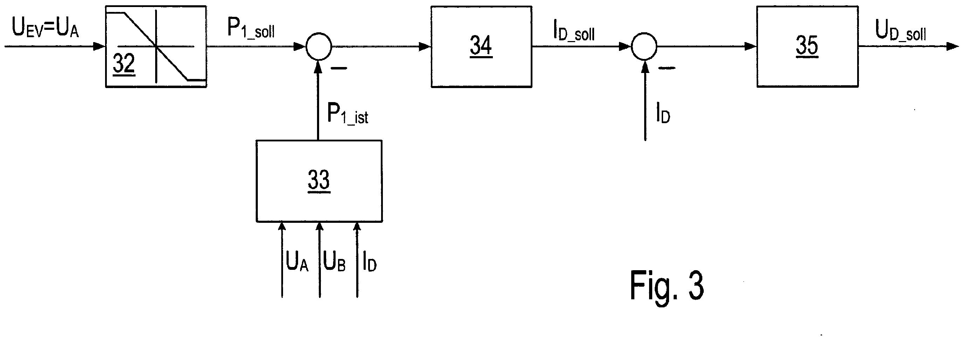

Eine Messwerterfassungseinrichtung 25 erfasst mittels zwei Spannungserfassungsmitteln (26, 27) und einem Stromerfassungsmittel 28 die Werte der Spannungen U_{A} und U_{B} und zumindest die Summe der Ströme I_{D1} und I_{D2}. Diese Werte werden dann einer Steuer- und Regelelektronik 29 zugeführt, welche wiederum Pulsbreitenmodulationssignale (30, 31), also PWM-Signale, an die Transistoren der Brückenschaltungen (23, 24) sendet, um die Spannung U_{D} einzustellen. Die Steuer- und Regelelektronik ist insbesondere Bestandteil der Wandlervorrichtung und vorzugsweise im gleichen Gehäuse wie die Leistungselektronik angeordnet. Für die Berechnung der PWM-Signale (30, 31), also für die Pulsmustergenerierung, verwendet die Steuer- und Regelelektronik 29 die Messwerte der Spannungen U_{A} und U_{B} sowie einen Sollwert U_{D_soll} für die Spannung U_{D}. Die Erzeugung des Sollwertes U_{D_soll} wird später anhand von Figur 3 erläutert.

Die Steuer- und Regelelektronik 29 ist über die erste Kommunikationsleitung 5 mit der Steuereinrichtung 6 verbunden, sie verfügt also über eine erste Kommunikationsschnittstelle. Über die zweite Kommunikationsleitung 10 ist die Steuer- und Regelelektronik 29 mit der ersten Energiespeichereinrichtung 9 verbunden, sie verfügt also über eine zweite Kommunikationsschnittstelle. Die zweite Energiespeichereinrichtung 9 kann, wie in Figur 1 gezeigt, mit der ersten Energiespeichereinrichtung 8 über die zweite Kommunikationsleitung 10 verbunden sein. Dadurch ist es möglich, dass die Steuer- und Regelelektronik 29 Zustandsdaten von den Energiespeichereinrichtungen (8, 9) empfängt. Es ist aber auch denkbar, dass die Steuer- und Regelelektronik 29 über eine dritte Kommunikationsschnittstelle verfügt und direkt Daten von der ersten Energiespeichereinrichtung 8 empfängt.

Figur 3 zeigt die Regelungsstruktur zur Erzeugung des Sollwertes U_{D_Soll}, welcher zur Pulsmustergenerierung verwendet wird. Die Erzeugung des Sollwertes U_{D_Soll} wird durch die Steuer- und Regelelektronik 29 durchgeführt. Dazu wird beispielsweise ein Mikrocontroller verwendet.

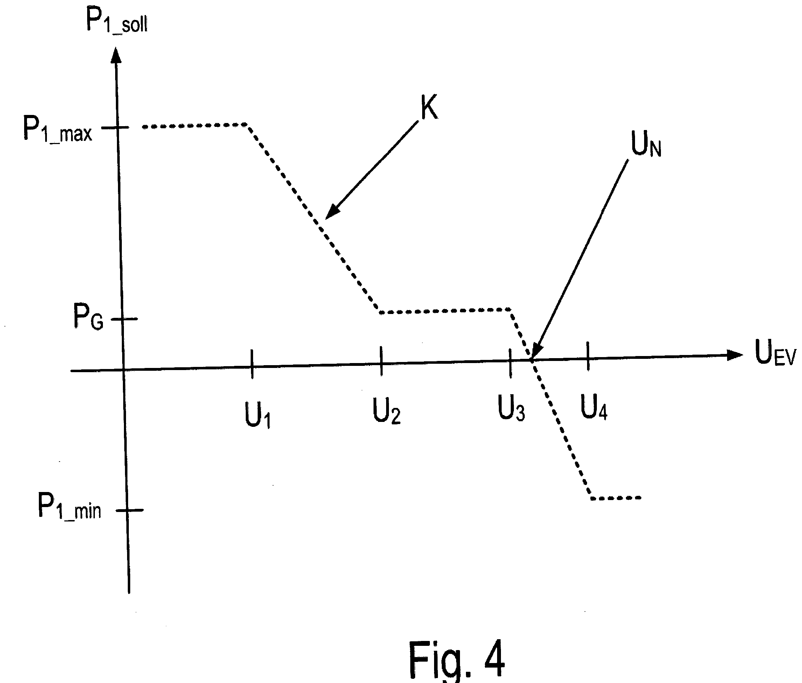

Es wird mittels des ersten Spannungserfassungsmittels 26 die Spannung U_{A} und somit die Spannung U_{EV} im Energiebus bestimmt, da U_{EV} = U_{A}. Anschließend wird mittels eines Sollwertgebers 32 mithilfe einer Sollwertkennlinie K ein Sollwert P_{1_soll} für den Leistungsfluss P₁ ermittelt. Die Sollwertkennlinie K ordnet jedem möglichen Wert der Spannung U_{EV} eindeutig einen Sollwert P_{1_soll} zu. Sie kann als Funktion K = P_{1_soll}(U_{EV}) ausgeführt sein. Ein Beispiel einer solchen Sollwertkennlinie K ist in Figur 4 gezeigt. Die Sollwertkennlinie K ist lokal - ohne direkte Vorgabe der Steuerung 6 - in der Steuer- und Regelelektronik 29 gespeichert, beispielsweise auf einem Festwertspeicher. Wie in Figur 3 gezeigt, wird also durch die Wandlervorrichtung 7 in Abhängigkeit der Spannung U_{EV} der Sollwert P_{1_soll} variiert, also verändert. Die konkrete Erzeugung des Sollwertes P_{1_soll} kann dabei mithilfe einer Tabelle und dazugehöriger Interpolation der Zwischenwerte ausgeführt werden. Alternativ kann auch zu jedem Spannungswert U_{EV} eine Echtzeitberechnung mittels des Mikrokontrollers erfolgen. Wesentlich ist nur, dass jeder Spannung U_{EV} eindeutig ein fester Sollwert P_{1_soll} zugeordnet ist. Diese Zuordnung kann beispielsweise in Form einer Funktion ausgestaltet sein.

Parallel zur Erzeugung des Sollwertes P_{1_soll} wird mittels einer Berechnungseinrichtung 33 der Istwert P_{1_ist} des Leistungsflusses P₁ bestimmt. Zur Berechnung des Istwertes werden die gemessenen Werte der Spannungen U_{A} und U_{B} sowie der gemessene Summenstrom I_{D} = I_{D1} + I_{D2} verwendet. Es wird dabei derjenige Spannungswert von U_{A} und U_{B} verwendet, welcher gerade niedriger ist.

Anschließend wird die Abweichung des Sollwertes P_{1_soll} vom Istwert P_{1_ist}, also die Soll-Ist-Differenz, bestimmt und einem ersten Regelglied 34 zugeführt. Das erste Regelglied 34 ist beispielsweise als P-Glied oder als PI-Glied ausgeführt. Das erste Regelglied 34 erzeugt einen Sollwert I_{D_soll} für den Summenstrom I_{D}. Die Abweichung dieses Sollwertes I_{D_soll} vom Istwert I_{D} des Summenstromes wird bestimmt und einem zweiten Regelglied 35 zugeführt. Das zweite Regelglied 35 ist beispielsweise als P-Glied oder als PI-Glied ausgeführt. Das zweite Regelglied 35 erzeugt schließlich einen Sollwert U_{D_soll}, welcher für die Pulsmustergenerierung verwendet wird.

Die Erzeugung des Sollwertes P_{1_soll} erfolgt anhand einer Sollwertkennlinie K. Ein Beispiel einer solchen Sollwertkennlinie K ist in Figur 4 gezeigt. Die Sollwertkennlinie K beschreibt den Zusammenhang zwischen dem Sollwert P_{1_soll} des Leistungsflusses P₁ und der Spannung U_{EV} im Energiebus 1. Die Sollwertkennlinie K ist also eine Funktion Leistungsflusssollwert P_{1_soll} in Abhängigkeit der Energiebusspannung U_{EV}, also K = P_{1_soll}(U_{EVS}).

Die maximal mögliche Einspeiseleistung P_{1_max} und die maximal mögliche Ladeleistung P_{1_min} sind Größen, welche von verschiedenen Parametern, wie beispielsweise Temperatur, abhängen. Die Werte von P_{1_max} sind durch die Wandlervorrichtung 7 anpassbar. Beispielsweise wird bei zu niedriger Betriebstemperatur des ersten Energiespeichers 8 der Wert von P_{1_max} nach unten, also auf einen betragsmäßig niedrigeren Wert, angepasst. Betragsmäßig können die Werte P_{1_max} und P_{1_min} verschieden sein.

Die in Figur 4 dargestellte Sollwertkennlinie K wird durch vier Parameter U₁, U₂, U₃ und U₄ in fünf Intervalle eingeteilt, welche im Folgenden beschrieben werden. Zusätzlich gibt es noch einen fünften Parameter P_{G}, dessen Bedeutung auch im Folgenden erklärt wird:

| | |
|---|---|
| U_{EV} < U₁: | Sollte die Spannung U_{EV} unter U₁ fallen, entspricht der Sollwert P_{1_soll} der maximalen Einspeiseleistung P_{1_max}. |
| U₁ < U_{EV} < U₂: | Mit steigendem Spannungsniveau im Energiebus sinkt der Sollwert P_{1_soll} linear von P_{1_soll} (U₁) = P_{1_max} bis P_{1_soll} (U₂) = P_{G}. |
| U₂ < U_{EV} < U₃: | Im Spannungsintervall [U₂, U₃] wird die Leistung P_{G} eingespeist, welche mit dem mittleren Leistungsbedarf der Grundlast korreliert. Die mittlere Grundlast, also der mittlere Leistungsbedarf aller Verbraucher, hängt von der intralogistischen Anwendung ab. |
| U₃ < U_{EV} < U₄: | Mit steigendem Spannungsniveau im Energiebus speist die erste Energiespeichereinrichtung immer weniger Leistung ein bis der Sollwert bei einer Spannung UN null beträgt, also P_{1_soll} (U_{N}) = 0. Mit weiter steigender Spannung wird die erste Energiespeichereinrichtung zunehmend mit größerer Leistung aufgeladen. Der Sollwert P_{1_soll} ist für U_{EV} > U_{N} negativ und nimmt linear ab bis der Minimalwert P_{1_min} bei U₄ erreicht wird. Der Sollwert nimmt also linear von P_{1_soll} (U₃) = P_{G} bis P_{1_soll} (U₄) = P₁_ₘᵢₙ ab und schneidet die U-Achse bei U_{N}, hier findet also ein Vorzeichenwechsel statt. |
| U_{EV} > U₄: | Sollte die Spannung U_{EV} über U₄ ansteigen, entspricht der Sollwert P_{1_soll} der maximalen Ladeleistung P_{1_min}. |

Es ist auch der Spezialfall U₂ = U₃ denkbar, dass also kein Plateau mit dem Sollwert P_{G} existiert. Ebenso ist der Spezialfall P_{G} = 0 denkbar. U_{N} ist dann mit U₃ identisch. Im Spannungsintervall [U₂, U₃] wird dann die benötigte Leistung allein durch die zweite Energiespeichereinrichtung aufgebracht, sofern keine externe Energiequelle zur Verfügung steht.

Der Sollwert P_{G} des konstanten Plateaus zwischen U₂ und U₃ ist ein weiterer Parameter der Funktion, welcher vorgegeben und variiert werden kann. Er ist erfindungsgemäß größer null und so zu wählen, dass er mit der mittleren Grundlast der intralogistischen Anwendung in direktem Zusammenhang steht. Die mittlere Grundlast aller Verbraucher sollte hauptsächlich durch die von der ersten Energiespeichereinrichtung eingespeisten Leistung gedeckt werden. Abweichungen von der mittleren Grundlast werden durch die zweite Energiespeichereinrichtung ausgeglichen. Der Wert U_{N} ergibt sich zwangsläufig durch die Vorgabe der Parameter U₃, U₄ und P_{G}. Er ist also insbesondere kein Parameter.

Sollte die erste Energiespeichereinrichtung 8 voll aufgeladen sein, also ihre maximale Aufnahmekapazität erreicht haben, so wird diese Information über die zweite Kommunikationsleitung 10 an die Wandlervorrichtung 7 gesendet. In diesem Fall wird der Sollwert P_{1_soll} für U_{EV} > U_{N} auf null gesetzt bis die Spannung U_{EV} wieder unter U₂ fällt.

Die Wandlervorrichtung 7 ist über eine dritte Kommunikationsleitung 20 mit einem Schalter S verbunden. Somit ist der zweite Verbraucher 16 durch den zweiten DC/DC-Wandler 7 vom Energiebus 1 trennbar. Es ist darüber hinaus auch denkbar, dass der erste Verbraucher 15 und/oder die Antriebseinrichtung (14, M3) der Hub- und/oder Handlingseinrichtung über jeweils einen weiteren Schalter vom Energiebus 1 trennbar sind, wobei diese Schalter ebenfalls durch den zweiten DC/DC-Wandler 7 ansteuerbar sind. Sollte die Spannung der ersten Energiespeichereinrichtung kritisch niedrige Werte annehmen, also eine Entladung der ersten Energiespeichereinrichtung drohen, so können die Verbraucher (15, 16) und/oder die Antriebseinrichtung (14, M3) der Hub- und/oder Handlingseinrichtung mittels der Schalter vom Energiebus 1 getrennt werden, um unnötigen Energieverbrauch zu vermeiden. Die Reihenfolge der Abschaltung erfolgt anhand einer vorgegebenen Priorisierung, welche vor Inbetriebnahme parametrierbar ist. Zuvor erfolgt jedoch eine Meldung an die Steuerung 6, die gegebenenfalls andere Reaktionen vorgibt.

Die Parameter U₁, U₂, U₃, U₄ und P_{G} werden vor Inbetriebnahme des MAS vorgegeben und sind an die logistische Anwendung sowie den Speicherkapazitäten der Energiespeichereinrichtungen (8, 9) angepasst. Im laufenden Betrieb sind die Parameter durch die Steuerung 6 oder einen Bedienereingriff anpassbar, um auf bestimmte Ausnahmesituationen zu reagieren. Die Steuerung 6 besitzt also die Möglichkeit durch geeignete Wahl der Parameter U₁, U₂, U₃, U₄ und P_{G} den Leistungsfluss P₁ zu jedem Betriebspunkt vorzugeben.

### Bezugseichenliste

- 1: Energieverteilungsmittel
- 2: Erster DC/DC-Wandler
- 3: Erster dreiphasiger Wechselrichter
- 4: Zweiter dreiphasiger Wechselrichter
- 5: Erste Kommunikationsleitung
- 6: Steuerung
- 7: Wandlervorrichtung, Zweiter DC/DC-Wandler
- 8: Erste Energiespeichereinrichtung
- 9: Zweite Energiespeichereinrichtung
- 10: Zweite Kommunikationsleitung
- 11: Gleichrichter
- 12: Sekundärinduktivität
- 13: Primärinduktivität
- 14: Dritter dreiphasiger Wechselrichter
- 15: Erster Verbraucher
- 16: Zweiter Verbraucher
- 17: Dritter DC/DC-Wandler
- 18: Erste Sicherung
- 19: Zweite Sicherung
- 20: Dritte Kommunikationsleitung
- 21: A-seitiger Gleichspannungsanschluss
- 22: B-seitiger Gleichspannungsanschluss
- 23: Erste Brückenschaltung
- 24: Zweite Brückenschaltung
- 25: Messwerterfassungseinrichtung
- 26: A-seitiges Spannungserfassungsmittel
- 27: B-seitiges Spannungserfassungsmittel
- 28: Stromerfassungsmittel
- 29: Steuer- und Regelelektronik
- 30: PWM-Signal B-Seite
- 31: PWM-Signal A-Seite
- 32: Sollwertgeber
- 33: Berechnungseinrichtung
- 34: Erstes Regelglied
- 35: Zweites Regelglied

## Patentansprüche

1. Verfahren zum Betreiben eines elektrischen Fahrzeuges aufweisend
- eine elektrische Fahrantriebseinrichtung (2, 3, 4, M1, M2) für die Fahrbewegung des Fahrzeugs,
- eine Steuereinrichtung (6) zur Steuerung der Fahrbewegung des Fahrzeugs,
- eine erste Energiespeichereinrichtung (8) und
- eine zweite Energiespeichereinrichtung (9), welche schneller auf- und entladbar ist als die erste Energiespeichereinrichtung (8),
wobei die elektrische Fahrantriebseinrichtung (2, 3, 4, M1, M2) über ein eine Gleichspannung (U_{EV}) führendes Energieverteilungsmittel (1) mit Antriebsleistung (P_{A}) versorgt wird,
wobei ein erster Leistungsfluss (P₁) zwischen der ersten Energiespeichereinrichtung (8) und dem Energieverteilungsmittel (1) mittels einer Wandlervorrichtung (7) auf einen Sollwert (P_{1_soll}) hingeregelt wird,
wobei sich ein zweiter Leistungsfluss (P₂) zwischen der zweiten Energiespeichereinrichtung (9) und dem Energieverteilungsmittel (1) selbsttätig einstellt,
wobei die Gleichspannung (U_{EV}) von der Wandlervorrichtung (7) erfasst wird und der Sollwert (P_{1_soll}) in der Wandlervorrichtung (7) in Abhängigkeit der erfassten Gleichspannung (U_{EV}) bestimmt wird,
wobei der Sollwert (P_{1_soll}) abhängig von der erfassten Gleichspannung (U_{EV}) gemäß einer Funktion K bestimmt wird,
**dadurch gekennzeichnet, dass**
dem Energieverteilungsmittel (1) zeitabschnittsweise Leistung (P_{L}) von einem Gleichrichter (11) des elektrischen Fahrzeugs zugeführt wird, der aus einer
Sekundärinduktivität des elektrischen Fahrzeugs gespeist wird, welcher eine Kapazität derart in Reihe oder parallel zugeschaltet ist, dass die Resonanzfrequenz des so gebildeten Schwingkreises der Frequenz eines in einen stationär angeordneten Primärleiter eingeprägten Wechselstromes gleicht,
wobei auf Teilbereichen einer Fahrstrecke die Energieversorgung induktiv ausgeführt wird und dadurch die beiden Energiespeichereinrichtungen (8, 9) entweder wieder aufgeladen werden oder ihr Ladezustand vollgeladen gehalten wird,
wobei für Fahrten abseits des Primärleiters das Fahrzeug durch die beiden Energiespeichereinrichtungen (8, 9) mit Leistung versorgt wird,
wobei der Sollwert (P_{1_soll}) der Funktion K unterhalb eines Wertes U₁ der Gleichspannung (U_{EV}) konstant ist,
der Sollwert (P_{1_soll}) der Funktion K in einem Wertebereich der Gleichspannung (U_{EV}) von U₁ bis U₂ betragsmäßig abnimmt,
der Sollwert (P_{1_soll}) der Funktion K in einem Wertebereich der Gleichspannung (U_{EV}) von U₂ bis U₃ einen konstanten Wert (P_{G}), welcher größer null ist, aufweist,
der Sollwert (P_{1_soll}) der Funktion K in einem Wertebereich der Gleichspannung (U_{EV}) von U₃ bis U₄ abnimmt, wobei ein Spannungswert (U_{N}) existiert, bei dem der Sollwert (P_{1_soll}) verschwindet, also null ist,
der Sollwert (P_{1_soll}) der Funktion K oberhalb eines Wertes U₄ der Gleichspannung (U_{EV}) konstant ist,
wobei U₄ > U₃ > U₂ > U₁ gilt.

2. Verfahren nach Anspruch 1,
**dadurch gekennzeichnet, dass**
die Funktion K stetig und/oder stetig differenzierbar ist.

3. Verfahren nach Anspruch 1 oder 2,
**dadurch gekennzeichnet, dass**
die Funktion K parametrierbar ist.

4. Verfahren nach Anspruch 3,
**dadurch gekennzeichnet, dass**
die Wandlervorrichtung (7) über eine erste Kommunikationsleitung (5) mit der Steuereinrichtung (6) verbunden ist und wobei die Parametrierung der Funktion K durch die Steuereinrichtung (6) vorgenommen wird.

5. Verfahren nach mindestens einem der vorangegangenen Ansprüche,
**dadurch gekennzeichnet, dass**
der Sollwert (P_{1_soll}) der Funktion K mit zunehmender Gleichspannung (U_{EV}) monoton abnimmt, wobei der Sollwert (P_{1_soll}) zumindest in einem Wertebereich der Gleichspannung (U_{EV}) konstant ist.

6. Verfahren nach mindestens einem der vorangegangenen Ansprüche,
**dadurch gekennzeichnet, dass**
die Funktion K einen absoluten Maximalwert (P_{1_max}) und/oder einen absoluten Minimalwert (P_{1_min}) im Wertebereich des Sollwertes (P_{1_soll}) aufweist.

7. Verfahren nach mindestens einem der vorangegangenen Ansprüche,
**dadurch gekennzeichnet, dass**
dem Energieverteilungsmittel (1) zeitabschnittsweise Leistung (P_{L}) von einem Gleichrichter (11) des elektrischen Fahrzeugs zugeführt wird, der aus einer Sekundärinduktivität des elektrischen Fahrzeugs gespeist wird.

8. Verfahren nach mindestens einem der vorangegangenen Ansprüche,
**dadurch gekennzeichnet, dass**
dem Energieverteilungsmittel (1) kontaktbehaftet Leistung durch eine, insbesondere mobile, externe Leistungsquelle zugeführt wird.

9. Verfahren nach mindestens einem der vorangegangenen Ansprüche,
**dadurch gekennzeichnet, dass**
die Wandlervorrichtung (7) über eine zweite Kommunikationsleitung (10) mit der ersten Energiespeichereinrichtung (8) und/oder mit der zweiten Energiespeichereinrichtung (9) verbunden ist, wobei über die zweite Kommunikationsleitung (10) Zustandsdaten wie beispielsweise Temperatur oder Ladezustand der ersten Energiespeichereinrichtung (8) und/oder der zweiten Energiespeichereinrichtung (9) an die Wandlervorrichtung (7) übermittelt werden.

10. Verfahren nach mindestens einem der vorangegangenen Ansprüche,
**dadurch gekennzeichnet, dass**
das elektrische Fahrzeug mindestens einen Verbraucher (M3, 14, 15, 16) aufweist,
wobei der mindestens eine Verbraucher (M3, 14, 15, 16) mittels des Energieverteilungsmittels (1) mit Leistung versorgt wird,
wobei zwischen dem mindestens einen Verbraucher (M3, 14, 15, 16) und dem Energieverteilungsmittel (1) ein ansteuerbares Schaltelement (S) angeordnet ist zur Trennung der Leistungsversorgung des mindestens einen Verbrauchers (M3, 14, 15, 16),
wobei das ansteuerbare Schaltelement (S) durch die Wandlervorrichtung (7) derart angesteuert wird, dass die Leistungsversorgung unterbrochen wird, sobald die erfasste Spannung (U_{EV}) unter einen bestimmten Wert fällt.

11. Elektrisches Fahrzeug zum Durchführen eines Verfahrens nach mindestens einem der vorangegangenen Ansprüche, aufweisend:
- eine elektrische Fahrantriebseinrichtung (2, 3, 4, M1, M2) für die Fahrbewegung des Fahrzeugs,
- eine Steuereinrichtung (6) zur Steuerung der Fahrbewegung,
- eine erste Energiespeichereinrichtung (8),
- eine zweite Energiespeichereinrichtung (9), welche schneller auf- und entladbar ist als die erste Energiespeichereinrichtung (8) und
- ein Energieverteilungsmittel (1) zur Bereitstellung von Antriebsenergie zum Betrieb der elektrischen Fahrantriebseinrichtung (2, 3, 4, M1, M2),
- einen Gleichrichter (11) der aus einer Sekundärinduktivität des elektrischen Fahrzeugs speisbar ist, welcher eine Kapazität derart in Reihe oder parallel zugeschaltet ist, dass die Resonanzfrequenz des so gebildeten Schwingkreises der Frequenz eines in einen stationär angeordneten Primärleiter eingeprägten Wechselstromes gleicht,
wobei die elektrische Fahrantriebseinrichtung (2, 3, 4, M1, M2) und die zweite Energiespeichereinrichtung (9) jeweils mit dem Energieverteilungsmittel (1) elektrisch verbunden sind,
wobei die erste Energiespeichereinrichtung (8) über eine Wandlervorrichtung (7) mit dem Energieverteilungsmittel (1) verbunden ist,
wobei die Wandlervorrichtung (7) einen Sollwertgeber (32) sowie eine Regeleinrichtung mit mindestens einem Regelglied (34, 35) aufweist,
wobei der Sollwertgeber (32) ein erstes Ausgangssignal (P_{1_soll}) erzeugt,
wobei ein erster Leistungsfluss (P₁) zwischen der ersten Energiespeichereinrichtung (9) und dem Energieverteilungsmittel (1) mittels der Regeleinrichtung auf das vom Sollwertgeber (32) bereitgestellte erste Ausgangssignal (P_{1_soll}) hinregelbar ist,
wobei die Wandlervorrichtung (7) ein Spannungserfassungsmittel (26) zur Erfassung der an dem Energieverteilungsmittel (1) anliegenden Spannung (U_{EV}) aufweist,
wobei das vom Spannungserfassungsmittel (26) erfasste Spannungssignal (U_{EV}) dem Sollwertgeber (32) zuführbar ist,
wobei der Sollwertgeber (32) derart eingerichtet ist, dass das erste Ausgangssignal (P_{1_soll}) in Abhängigkeit vom Spannungssignal (U_{EV}) gemäß einer Funktion K bestimmbar ist,
**dadurch gekennzeichnet, dass**
wobei dem Energieverteilungsmittel (1) zeitabschnittsweise Leistung (P_{L}) von dem Gleichrichter (11) zuführbar ist,
wobei das Fahrzeug ferner dazu eingerichtet ist, dass auf Teilbereichen einer Fahrstrecke die Energieversorgung induktiv ausgeführt wird und dadurch die beiden Energiespeichereinrichtungen (8, 9) entweder wieder aufgeladen werden oder ihr Ladezustand vollgeladen gehalten wird
und das Fahrzeug ferner dazu eingerichtet ist, dass für Fahrten abseits des Primärleiters das Fahrzeug durch die beiden Energiespeichereinrichtungen (8, 9) mit Leistung versorgt wird,
wobei der Sollwert (P_{1_soll}) der Funktion K unterhalb eines Wertes U₁ der Gleichspannung (U_{EV}) konstant ist,
der Sollwert (P_{1_soll}) der Funktion K in einem Wertebereich der Gleichspannung (U_{EV}) von U₁ bis U₂ betragsmäßig abnimmt,
der Sollwert (P_{1_soll}) der Funktion K in einem Wertebereich der Gleichspannung (U_{EV}) von U₂ bis U₃ einen konstanten Wert (P_{G}), welcher größer null ist, aufweist,
der Sollwert (P_{1_soll}) der Funktion K in einem Wertebereich der Gleichspannung (U_{EV}) von U₃ bis U₄ abnimmt, wobei ein Spannungswert (U_{N}) existiert, bei dem der Sollwert (P_{1_soll}) verschwindet, also null ist,
der Sollwert (P_{1_soll}) der Funktion K oberhalb eines Wertes U₄ der Gleichspannung (U_{EV}) konstant ist,
wobei U₄ > U₃ > U₂ > U₁ gilt.

12. Elektrisches Fahrzeug nach Anspruch 11,
**dadurch gekennzeichnet, dass**
die Wandlervorrichtung ein erstes Regelglied (34) aufweist, wobei dem ersten Regelglied die Differenz zwischen dem ersten Ausgangssignal (P_{1_soll}) und einem ersten Ist-Wert (P_{1_ist}) zuführbar ist, wobei mittels des ersten Regelglieds (34) ein zweites Ausgangssignal (I_{D_soll}) erzeugbar ist.

13. Elektrisches Fahrzeug nach Anspruch 12,
**dadurch gekennzeichnet, dass**
die Wandlervorrichtung ein zweites Regelglied (35) aufweist, wobei dem zweiten Regelglied die Differenz zwischen dem zweiten Ausgangssignal (I_{D_soll}) und einem zweiten Ist-Wert (I_{D_ist}) zuführbar ist, wobei mittels des zweiten Regelglieds (35) ein drittes Ausgangssignal (U_{D_soll}) erzeugbar ist.

## Claims

1. Method for operating an electric vehicle comprising
- an electrical traction drive device (2, 3, 4, M1, M2) for the travelling motion of the vehicle,
- a control device (6) for controlling the travelling motion of the vehicle,
- a first energy storage device (8) and
- a second energy storage device (9), which can be charged and discharged more quickly than the first energy storage device (8),
the electrical traction drive device (2, 3, 4, M1, M2) being supplied with driving power (P_{A}) by means of an energy distribution means (1) carrying a DC voltage (U_{EV}),
a first power flow (P₁) between the first energy storage device (8) and the energy distribution means (1) being controlled towards a setpoint (P_{1_set}) by means of a transformer apparatus (7),
a second power flow (P₂) between the second energy storage device (9) and the energy distribution means (1) being adjusted automatically,
the DC voltage (U_{EV}) being detected by the transformer apparatus (7) and the setpoint (P_{1_set}) being determined in the transformer apparatus (7) on the basis of the detected DC voltage (U_{EV}),
the setpoint (P_{1_set}) being determined according to a function K on the basis of the detected DC voltage (U_{EV}),
**characterised in that**
the energy distribution means (1) is, over time intervals, fed power (P_{L}) by a rectifier (11) of the electric vehicle, said rectifier being powered from a secondary inductor of the electric vehicle, a capacitor being connected in series or in parallel with said secondary inductor such that the resonant frequency of the resonant circuit thus formed is equal to the frequency of an alternating current impressed in an immovably arranged primary conductor, the energy supply being configured to be inductive over portions of a route and, as a result, the two energy storage devices (8, 9) being recharged or the charging state thereof being held at full charge,
the vehicle being supplied with power by the two energy storage devices (8, 9) for journeys remote from the primary conductor,
the setpoint (P_{1_set}) of the function K being constant below a value U₁ of the DC voltage (U_{EV}),
the setpoint (P_{1_set}) of the function K decreasing in magnitude in a value range of the DC voltage (U_{EV}) from U₁ to U₂,
the setpoint (P_{1_set}) of the function K having a constant value (P_{G}), which is greater than zero, in a value range of the DC voltage (U_{EV}) from U₂ to U₃,
the setpoint (_{P1_set}) of the function K decreasing in a value range of the DC voltage (U_{EV}) from U₃ to U₄, there existing a voltage value (U_{N}) at which the setpoint (P_{1_set}) disappears, i.e. is zero,
the setpoint (P_{1_set}) of the function K being constant above a value U₄ of the DC voltage (U_{EV}),
where U₄ > U₃ > U₂ > U₁.

2. Method according to claim 1,
**characterised in that**
the function K is continuous and/or continuously differentiable.

3. Method according to either claim 1 or claim 2,
**characterised in that**
the function K can be parameterised.

4. Method according to claim 3,
**characterised in that**
the transformer apparatus (7) is connected to the control device (6) by means of a first communications line (5), and the function K being parameterised by the control device (6).

5. Method according to at least one of the preceding claims,
**characterised in that**
the setpoint (P_{1_set}) of the function K decreases monotonically as the DC voltage (U_{EV}) increases, the setpoint (P_{1_set}) being constant at least in one value range of the DC voltage (U_{EV}).

6. Method according to at least one of the preceding claims,
**characterised in that**
the function K has an absolute maximum value (P_{1_max}) and/or an absolute minimum value (P_{1_min}) in the value range of the setpoint (P_{1_set}).

7. Method according to at least one of the preceding claims,
**characterised in that**
the energy distribution means (1) is, over time intervals, fed power (P_{L}) by a rectifier (11) of the electric vehicle, said rectifier being powered from a secondary inductor of the electric vehicle.

8. Method according to at least one of the preceding claims,
**characterised in that**
the energy distribution means (1) is, in a contact-based manner, supplied with power by an, in particular mobile, external power source.

9. Method according to at least one of the preceding claims,
**characterised in that**
the transformer apparatus (7) is connected to the first energy storage device (8) and/or to the second energy storage device (9) by means of a second communications line (10), status data such as the temperature or charging state of the first energy storage device (8) and/or of the second energy storage device (9) being transmitted to the transformer apparatus (7) by means of the second communications line (10).

10. Method according to at least one of the preceding claims,
**characterised in that**
the electric vehicle comprises at least one load (M3, 14, 15, 16),
the at least one load (M3, 14, 15, 16) being supplied with power by means of the energy distribution means (1),
an actuatable switch element (S) for disconnecting the power supply of the at least one load (M3, 14, 15, 16) being arranged between the at least one load (M3, 14, 15, 16) and the energy distribution means (1),
the actuatable switch element (S) being actuated by the transformer apparatus (7) such that the power supply is interrupted as soon as the detected voltage (U_{EV}) falls below a particular value.

11. Electric vehicle for carrying out a method according to at least one of the preceding claims, comprising:
- an electrical traction drive device (2, 3, 4, M1, M2) for the travelling motion of the vehicle,
- a control device (6) for controlling the travelling motion,
- a first energy storage device (8),
- a second energy storage device (9), which can be charged and discharged more quickly than the first energy storage device (8), and
- an energy distribution means (1) for providing driving energy to operate the electrical traction drive device (2, 3, 4, M1, M2),
- a rectifier (11), which can be powered from a secondary inductor of the electric vehicle, a capacitor being connected in series or in parallel with said secondary inductor such that the resonant frequency of the resonant circuit thus formed is equal to the frequency of an alternating current impressed in an immovably arranged primary conductor,
the electrical traction drive device (2, 3, 4, M1, M2) and the second energy storage device (9) each being electrically connected to the energy distribution means (1),
the first energy storage device (8) being connected to the energy distribution means (1) by means of a transformer apparatus (7),
the transformer apparatus (7) having a setpoint generator (32) and a closed-loop control device, which has at least one controlling element (34, 35),
the setpoint generator (32) generating a first output signal (P_{1_set}),
a first power flow (P₁) between the first energy storage device (9) and the energy distribution means (1) being able to be controlled, by means of the closed-loop control device, towards the first output signal (P_{1_set}) provided by the setpoint generator (32),
the transformer apparatus (7) having a voltage detection means (26) for detecting the voltage (U_{EV}) applied at the energy distribution means (1),
the voltage signal (U_{EV}) detected by the voltage detection means (26) being able to be fed to the setpoint generator (32),
the setpoint generator (32) being configured such that the first output signal (P_{1_set}) can be determined according to a function K on the basis of the voltage signal (U_{EV}), **characterised in that**
power (P_{L}) can, over time intervals, be fed to the energy distribution means (1) by the rectifier (11),
the vehicle further being configured such that the energy supply is configured to be inductive over portions of a route and, as a result, the two energy storage devices (8, 9) are recharged or the charging state thereof is held at full charge,
and the vehicle further being configured such that the vehicle is supplied with power by the two energy storage devices (8, 9) for journeys remote from the primary conductor,
the setpoint (P_{1_set}) of the function K being constant below a value U₁ of the DC voltage (U_{EV}),
the setpoint (P_{1_set}) of the function K decreasing in magnitude in a value range of the DC voltage (U_{EV}) from U₁ to U₂,
the setpoint (P_{1_set}) of the function K having a constant value (P_{G}), which is greater than zero, in a value range of the DC voltage (U_{EV}) from U₂ to U₃,
the setpoint (P_{1_set}) of the function K decreasing in a value range of the DC voltage (U_{EV}) from U₃ to U₄, there existing a voltage value (U_{N}) at which the setpoint (P_{1_set}) disappears, i.e. is zero,
the setpoint (P_{1_set}) of the function K being constant above a value U₄ of the DC voltage (U_{EV}),
where U₄ > U₃ > U₂ > U₁.

12. Electric vehicle according to claim 11,
**characterised in that**
the transformer apparatus comprises a first controlling element (34), the difference between the first output signal (P_{1_set}) and a first actual value (P_{1_act}) being able to be fed to the first controlling element, a second output signal (I_{D_set}) being able to be generated by means of the first controlling element (34).

13. Electric vehicle according to claim 12,
**characterised in that**
the transformer apparatus comprises a second controlling element (35), the difference between the second output signal (I_{D_set}) and a second actual value (I_{D_act}) being able to be fed to the second controlling element, a third output signal (U_{D_set}) being able to be generated by means of the second controlling element (35).

## Revendications

1. Procédé de fonctionnement d'un véhicule électrique comportant
- un organe d'entraînement électrique (2, 3, 4, M1, M2) destiné à déplacer le véhicule,
- un organe de commande (6) destiné à commander le déplacement du véhicule,
- un premier organe de stockage d'énergie (8) et
- un deuxième organe de stockage d'énergie (9) qui peut être chargé et déchargé plus rapidement que le premier organe de stockage d'énergie (8),
l'organe d'entraînement électrique (2, 3, 4, M1, M2) étant alimenté en puissance d'entraînement (P_{A}) par le biais d'un moyen de distribution d'énergie (1) transportant une tension continue (U_{EV}),
un premier flux de puissance (P₁) entre le premier organe de stockage d'énergie (8) et le moyen de distribution d'énergie (1) étant régulé à une valeur cible (P_{1_cible}) au moyen d'un dispositif convertisseur (7),
un deuxième flux de puissance (P₂) entre le deuxième organe de stockage d'énergie (9) et le moyen de distribution d'énergie (1) étant réglé automatiquement, la tension continue (U_{EV}) étant détectée par le dispositif convertisseur (7) et la valeur cible (P_{1_cible}) étant déterminée dans le dispositif convertisseur (7) en fonction de la tension continue détectée (U_{EV}),
la valeur cible (P_{1_cible}) étant déterminée en fonction de la tension continue détectée (U_{EV}) selon une fonction K, **caractérisé en ce que**
de la puissance (P_{L}) étant amenée périodiquement au moyen de distribution d'énergie (1) par un redresseur (11) du véhicule électrique qui est alimenté à partir d'une inductance secondaire du véhicule électrique qui est montée en série ou en parallèle d'une capacité de telle sorte que la fréquence de résonance du circuit résonant ainsi formé soit égale à la fréquence d'un courant alternatif appliqué dans un conducteur primaire fixe, l'alimentation en énergie étant effectuée par induction sur des zones partielles d'un itinéraire et en conséquence les deux organes de stockage d'énergie (8, 9) étant rechargés ou leur état de charge étant maintenu à pleine charge,
le véhicule étant alimenté en puissance par les deux organes de stockage d'énergie (8, 9) pour des trajets à distance du conducteur primaire,
la valeur cible (P_{1_cible}) de la fonction K étant constante au-dessous d'une valeur U₁ de la tension continue (U_{EV}), la valeur cible (P_{1_cible}) de la fonction K diminuant en valeur absolue dans une plage de valeurs de la tension continue (U_{EV}) de U₁ à U₂,
la valeur cible (P_{1_cible}) de la fonction K ayant une valeur constante (P_{G}) supérieure à zéro dans une plage de valeurs de la tension continue (U_{EV}) de U₂ à U₃,
la valeur cible (P_{1_cible}) de la fonction K diminuant dans une plage de valeurs de la tension continue (U_{EV}) de U₃ à U₄, une valeur de tension (U_{N}) existant pour laquelle la valeur cible (P1_cible) est infiniment petite, donc nulle,
la valeur cible (P_{1_cible}) de la fonction K étant constante au-dessus d'une valeur U₄ de la tension continue (U_{EV}), avec U₄ > U₃ > U₂ > U₁.

2. Procédé selon la revendication 1,
**caractérisé en ce que**
la fonction K est continue et/ou continûment dérivable.

3. Procédé selon la revendication 1 ou 2,
**caractérisé en ce que**
la fonction K est paramétrable.

4. Procédé selon la revendication 3,
**caractérisé en ce que**
le dispositif convertisseur (7) est relié à l'organe de commande (6) par le biais d'une première ligne de communication (5) et le paramétrage de la fonction K est effectué par le biais de l'organe de commande (6).

5. Procédé selon l'une au moins des revendications précédentes,
**caractérisé en ce que**
la valeur cible (P_{1_cible}) de la fonction K diminue de façon monotone à mesure que la tension continue (U_{EV}) augmente, la valeur cible (P_{1_cible}) étant constante au moins dans une plage de valeurs de la tension continue (U_{EV}).

6. Procédé selon l'une au moins des revendications précédentes,
**caractérisé en ce que**
la fonction K a une valeur maximale absolue (P_{1_max}) et/ou une valeur minimale absolue (P_{1_min}) dans la plage de valeurs de la valeur cible (P_{1_cible}).

7. Procédé selon l'une au moins des revendications précédentes,
**caractérisé en ce que**
le moyen de distribution d'énergie (1) est alimenté périodiquement en puissance (P_{L}) par un redresseur (11) du véhicule électrique qui est alimenté à partir d'une inductance secondaire du véhicule électrique.

8. Procédé selon l'une au moins des revendications précédentes,
**caractérisé en ce que**
de la puissance est amenée avec contact au moyen de distribution d'énergie (1) par le biais d'une source de puissance extérieure, notamment mobile.

9. Procédé selon l'une au moins des revendications précédentes,
**caractérisé en ce que**
le dispositif convertisseur (7) est relié au premier organe de stockage d'énergie (8) et/ou au deuxième organe de stockage d'énergie (9) par le biais d'une deuxième ligne de communication (10), des données d'état telles que par exemple la température ou l'état de charge du premier organe de stockage d'énergie (8) et/ou du deuxième organe de stockage d'énergie (9) étant transmises au dispositif convertisseur (7) par le biais de la deuxième ligne de communication (10).

10. Procédé selon l'une au moins des revendications précédentes,
**caractérisé en ce que**
le véhicule électrique comporte au moins un consommateur (M3, 14, 15, 16),
l'au moins un consommateur (M3, 14, 15, 16) étant alimenté en puissance à l'aide du moyen de distribution d'énergie (1),
un élément de commutation commandable (S) étant disposé entre l'au moins un consommateur (M3, 14, 15, 16) et le moyen de distribution d'énergie (1) pour couper l'alimentation de puissance de l'au moins un consommateur (M3, 14, 15, 16),
l'élément de commutation commandable (S) étant commandé par le dispositif convertisseur (7) de telle sorte que l'alimentation de puissance soit interrompue dès que la tension détectée (U_{EV}) tombe au-dessous d'une valeur déterminée.

11. Véhicule électrique destiné à la mise en œuvre d'un procédé selon l'une au moins des revendications précédentes, ledit véhicule comprenant :
- un organe d'entraînement électrique (2, 3, 4, M1, M2) destiné à déplacer le véhicule,
- un organe de commande (6) destiné à commander le déplacement,
- un premier organe de stockage d'énergie (8),
- un deuxième organe de stockage d'énergie (9) qui peut être chargé et déchargé plus rapidement que le premier organe de stockage d'énergie (8) et
- un moyen de distribution d'énergie (1) destiné à fournir de l'énergie d'entraînement pour faire fonctionner l'organe d'entraînement électrique (2, 3, 4, M1, M2),
- un redresseur (11) qui peut être alimenté par une inductance secondaire du véhicule électrique qui est montée en série ou en parallèle avec une capacité de telle sorte que la fréquence de résonance du circuit résonant ainsi formé soit égale à la fréquence d'un courant alternatif appliqué dans un conducteur primaire fixe,
l'organe d'entraînement électrique (2, 3, 4, M1, M2) et le deuxième organe de stockage d'énergie (9) étant chacun reliés électriquement au moyen de distribution d'énergie (1),
le premier organe de stockage d'énergie (8) étant relié au moyen de distribution d'énergie (1) par le biais d'un dispositif convertisseur (7),
le dispositif convertisseur (7) comportant un générateur de valeurs cibles (32) et un organe de régulation pourvu d'au moins un élément de régulation (34, 35),
le générateur de valeurs cibles (32) générant un premier signal de sortie (P_{1_cible}),
un premier flux de puissance (P₁) entre le premier organe de stockage d'énergie (9) et le moyen de distribution d'énergie (1) pouvant être régulé sur le premier signal de sortie (P_{1_cible}) fourni par le générateur de valeurs cibles (32) à l'aide de l'organe de régulation,
le dispositif convertisseur (7) comportant un moyen de détection de tension (26) destiné à détecter la tension (U_{EV}) appliquée au moyen de distribution d'énergie (1),
le signal de tension (U_{EV}) détecté par le moyen de détection de tension (26) pouvant être amené au générateur de valeurs cibles (32),
le générateur de valeurs cibles (32) étant conçu de telle sorte que le premier signal de sortie (P_{1_cible}) puisse être déterminé en fonction du signal de tension (U_{EV}) selon une fonction K,
**caractérisé en ce que**
de la puissance (P_{L}) peut être amenée périodiquement au moyen de distribution d'énergie (1) par le redresseur (11),
le véhicule étant en outre conçu pour que l'alimentation en énergie soit effectuée par induction sur des zones partielles d'un itinéraire, et ainsi les deux organes de stockage d'énergie (8, 9) étant rechargés ou leur état de charge étant maintenu complètement chargé,
et le véhicule étant en outre conçu pour que le véhicule soit alimenté en puissance par les deux organes de stockage d'énergie (8, 9) pour des trajets éloignés du conducteur primaire,
la valeur cible (P_{1_cible}) de la fonction K étant constante au-dessous d'une valeur U₁ de la tension continue (U_{EV}),
la valeur cible (P_{1_cible}) de la fonction K diminuant en valeur absolue dans une plage de valeurs de la tension continue (U_{EV}) de U₁ à U₂,
la valeur cible (P_{1_cible}) de la fonction K ayant une valeur constante (P_{G}) supérieure à zéro dans une plage de valeurs de la tension continue (U_{EV}) de U₂ à U₃,
la valeur cible (P_{l_cible}) de la fonction K diminuant dans une plage de valeurs de la tension continue (U_{EV}) de U₃ à U₄, une valeur de tension (U_{N}) existant pour laquelle la valeur cible (P_{1_cible}) est infiniment petite, donc nulle, la valeur cible (P_{1_cible}) de la fonction K étant constante au dessus d'une valeur U₄ de la tension continue (U_{EV}), avec U₄ > U₃ > U₂ > U₁.

12. Véhicule électrique selon la revendication 11,
**caractérisé en ce que**
le dispositif convertisseur comporte un premier élément de régulation (34), la différence entre le premier signal de sortie (P_{1_cible}) et une première valeur réelle (P_{1_réel}) pouvant être amenée au premier élément de régulation, un deuxième signal de sortie (I_{D_cible}) pouvant être généré au moyen du premier élément de régulation (34).

13. Véhicule électrique selon la revendication 12,
**caractérisé en ce que**
le dispositif convertisseur comporte un deuxième élément de régulation (35), la différence entre le deuxième signal de sortie (L_{D_cible}) et une deuxième valeur réelle (I_{D_réel}) pouvant être amenée au deuxième élément de régulation, un troisième signal de sortie (U_{D_cible}) pouvant être généré au moyen du deuxième élément de régulation (35).
